# FASCICULE DE BREVET EUROPEEN

(11) **EP 1 725 426 B1**
(45) Date de publication et mention de la délivrance du brevet: **06.06.2012**
(21) Numéro de dépôt: 05717709.9
(22) Date de dépôt: 09.02.2005
(51) Int. Cl.: B60N 2/42

(54) **SIEGE DE VEHICULE AUTOMOBILE A ASSISE CONSTITUEE D'UNE COQUE ANTI-SOUSMARINAGE**
MIT EINEM AUS EINER SCHALE ZUR VERHINDERUNG VON ABTAUCHEN BESTEHENDEN SITZKISSEN VERSEHENER KRAFTFAHRZEUGSITZ
MOTOR VEHICLE SEAT PROVIDED WITH A SEAT CUSHION CONSISTING OF AN ANTI-SUBMARINING SHELL

(30) Priorité: 25.02.2004 FR 0401895
(43) Date de publication de la demande: 29.11.2006
(73) Titulaire: Renault s.a.s., 92100 Boulogne Billancourt (FR)
(72) Inventeur: MITU, Aurel, F-95000 Cergy (FR); SOUVILLE, Philippe, F-78180 Montigny le Bretonneux (FR)
(86) Numéro de dépôt international: PCT/FR2005/050078
(87) Numéro de publication internationale: WO 2005/084997

(56) Documents cités:
- EP-A- 0 028 564
- EP-A- 0 990 553
- FR-A- 2 662 649
- FR-A- 2 777 233
- FR-A- 2 797 823

## Description

La présente invention concerne un siège de véhicule automobile, et notamment une banquette arrière, comportant une assise constituée d'une coque rigide recouverte de moyens de rembourrage, la coque étant supportée par des appuis latéraux reposant directement ou indirectement sur le plancher du véhicule, la coque formant un plateau ou une cuvette se relevant à l'avant pour former une bosse anti-sous-marinage.

Les dispositifs dits anti-sous-marinage sont destinés à retenir sous les cuisses l'occupant d'un siège afin de limiter son glissement vers l'avant lors d'un choc du véhicule : en l'absence d'un tel dispositif, le corps sanglé sur le siège pourrait se déplacer sous la ceinture, par glissement du bassin sur l'assise, et entraîner des lésions abdominales.

Dans les sièges classiques, les dispositifs anti-sous-marinage sont souvent constitués d'une barre anti-sous-marinage disposée sous les cuisses. Une telle barre ne convient pas à un siège à coque.

On connaît par le document EP 0459 839 A1 au nom de la Demanderesse un siège à coque dont l'assise peut basculer vers l'avant grâce à des articulations placées à l'avant du siège et dont la coque comporte à l'avant une bosse anti-sous-marinage. Celle-ci, qui forme donc un creux sous la coque, coopère avec une saillie du plancher pour offrir un appui rigide en cas de choc. Mais cette saillie du plancher peut constituer une gêne.

On connaît par exemple par le document FR-A-2 777 233 (correspondant au préambule de la revendication indépendante) une banquette arrière, composée d'une assise et d'un dossier, repliable vers l'avant en portefeuille. La coque de l'assise comporte une bosse anti-sous-marinage qui coopère avec un moyen anti-sous-marinage escamotable prévu sur le plancher disposé sous le creux formé par la bosse anti-sous-marinage et venant s'accrocher dans un logement formé dans ce creux. Cette construction est relativement compliquée.

L'invention vise à améliorer la sécurité des sièges à coque connus au niveau de la bosse anti-sous-marinage sans avoir les inconvénients des dispositifs précités.

L'invention atteint son but grâce à un siège de véhicule automobile, et notamment une banquette arrière, comportant une assise constituée d'une coque rigide recouverte de moyens de rembourrage, la coque étant supportée par des appuis latéraux reposant directement ou indirectement sur le plancher du véhicule, la coque formant un plateau ou une cuvette se relevant à l'avant pour former sur la largeur du siège une bosse transversale anti-sous-marinage, caractérisé en ce que la face inférieure de la coque comprend, le long du creux correspondant à la bosse anti-sous-marinage, au moins un élément de renfort limitant la déformation de la bosse anti-sous-marinage et disposé de manière à venir sensiblement en butée sur le plancher sous-jacent.

L'élément de renfort n'est pas nécessairement en contact permanent normal avec le plancher sous-jacent mais il n'en est pas trop éloigné de manière à pouvoir buter contre lui en cas de choc, lors de la déformation de la bosse anti-sous-marinage.

En fonction de la largeur du siège, il est avantageux de prévoir deux renforts disposés sensiblement au tiers et au deux-tiers de la largeur du siège.

Les renforts peuvent être réalisés de multiples façons mais ils sont avantageusement sous forme de pyramides tronquées qu'on peut solidariser, par exemple par soudage, à la face inférieure de la coque du siège.

Les renforts sont avantageusement creux et peuvent être utilisés pour loger un coussin gonflable permettant de faire de l'anti-sous-marinage actif (le gonflement du coussin se fait en cas de choc).

L'invention s'applique de préférence à une banquette à dossier et assise repliable en portefeuille. Elle permet d'augmenter sans problème de sécurité la portée de la coque entre ses appuis, et donc de reporter les appuis le plus latéralement possible. Ces appuis sont avantageusement des glissières à charnière, comme décrit dans la demande française de la Demanderesse déposée le 24 octobre 2003 sous le numéro 0312480.

D'autres caractéristiques et avantages de l'invention ressortiront de la description suivante d'un exemple de réalisation. Il sera fait référence aux dessins annexés sur lesquels :

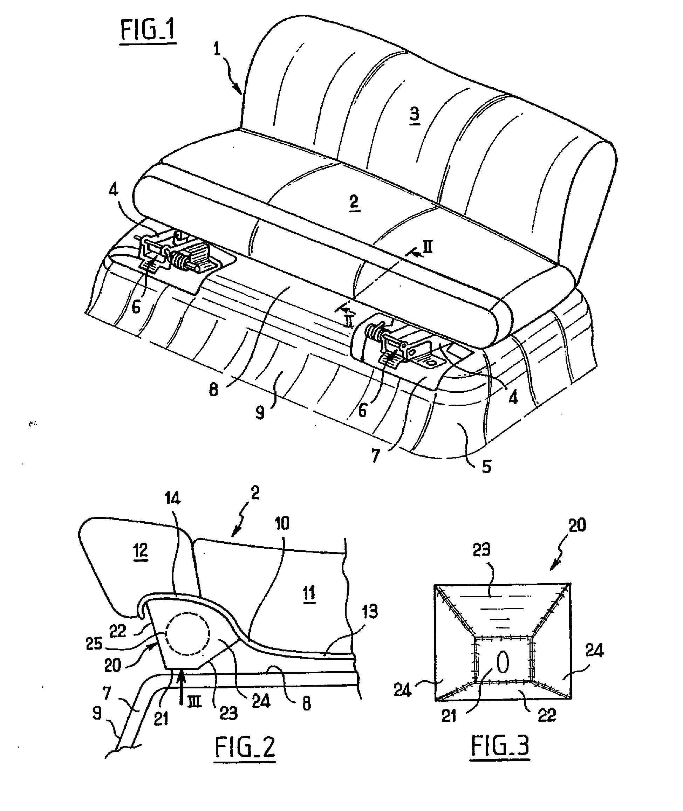

La figure 1 est une représentation schématique de banquette arrière de véhicule automobile à laquelle s'applique l'invention.
La figure 2 est vue en coupe partielle selon la ligne II-II de la figure 1, montrant le renfort disposé sous la bosse anti-sous-marinage de la banquette conformément à l'invention.
La figure 3 représente en vue de dessous un exemple de réalisation d'un renfort, vu selon la flèche III de la figure 2.

La banquette 1 comprend une assise 2 et un dossier 3, ce dernier étant articulé sur un bord longitudinal arrière de l'assise.

L'assise 2 comprend deux glissières 4 qui s'étendent sensiblement perpendiculairement à la largeur de l'assise 2. Ces glissières permettent la fixation de l'assise sur le plancher 5 du véhicule.

Du côté du bord longitudinal avant de l'assise 2, chaque glissière 4 est montée articulée au plancher 5 par l'intermédiaire de deux charnières 6, avantageusement associées à un système compensateur de charge comme celui décrit dans la demande française précitée n° 0312480.

Le plancher 5, en dehors d'éventuelles cavités de logement 7 des charnières 6, forme un plateau plan 8 sous la banquette, bordé à l'avant par une partie en pente descendante 9.

De façon connue, le dossier 3 peut se replier sur l'assise 2, et l'ensemble peut être basculé vers l'avant autour des charnières 6 de manière à prendre une position sensiblement verticale, dégageant le plateau 8 vers l'arrière. De manière connue mais non décrite ici, il est prévu divers moyens de verrouillage en position et des moyens de commande de déverrouillage. Il va de soi que l'assise pourrait aussi être indépendante du dossier.

L'assise 2 est constituée à sa partie inférieure d'une coque métallique formée ou profilée 10 recouverte de coussins de rembourrage 11 et 12, par exemple en mousse, éventuellement de nature et/ou d'élasticité différente. Le coussin 11 recouvre une partie sensiblement plane ou en cuvette légère 13 de la coque, formant l'essentiel de l'assise et relativement parallèle au plateau 8 du plancher 7. Cette partie de cuvette 13 remonte à l'avant pour former la bosse anti-sous-marinage 14, surmontée par le coussin 12. La bosse 14 forme une « vague » cylindrique qui s'étend sur toute ou sensiblement toute la largeur de la banquette.

La face inférieure de la coque 10 comporte, dans le creux correspondant à la bosse anti-sous-marinage 14, deux renforts 20 répartis sur la largeur de la banquette, entre les glissières 4. Il s'agit avantageusement de renforts métalliques soudés à la tôle de la coque 10.

Les renforts 20 comportent d'une part des éléments structurels renforçant la bosse anti-sous-marinage et limitant sa déformation. D'autre part, ils servent de butée contre le plancher en cas de choc.

Les renforts peuvent par exemple être sous forme de pyramide tronquée renversée, comportant une petite face d'extrémité 21 disposée en vis-à-vis du plateau 8 du plancher 7, à une légère distance. Cette petite face 21 est bordée d'une face antérieure 22 proche de la verticale, d'une face postérieure 23 plus inclinée, et de deux faces latérales 24 formant des sortes de goussets dans le creux de la bosse anti-sous-marinage et l'empêchant de se fermer et de se déformer.

En cas de choc, les renforts 20 prennent appui sur le plancher 7 et empêchent la bosse anti-sous-marinage 14 de s'affaisser et de ne plus remplir son rôle de sécurité.

Les renforts 20 ne prennent cependant pas de place et, du fait qu'ils sont solidaires de la coque 10, sont relevés avec elle lors du pliage de la banquette en portefeuille, de manière à laisser le plancher libre, sur sa partie de plateau 8.

La forme des renforts, comme leur nombre et leur placement, peut différer de celle représentée. Notamment, au lieu d'être en pyramides carrées formant de simples plots, ils peuvent être plus allongés transversalement.

De plus, comme ils sont creux, ils peuvent avantageusement loger des dispositifs de sécurité complémentaire comme par exemple des moyens anti-sous-marinage actifs symbolisés par la référence 25, constitués comme connu en soi par des coussins pneumatiques se déployant sous la pression d'un gaz qui se libère d'une cartouche en cas de choc. Des ouvertures prévues dans certaines parois (par exemple les parois latérales 24) des renforts 20, permettent de loger ces dispositifs en totalité ou en partie. Dans certains cas, la bosse pyramidale 20 peut être le boîtier du dispositif actif de sécurité ; le montage est alors directement effectué par soudage du boîtier du système actif sur la coque de siège.

L'invention est applicable non seulement aux banquettes d'un seul tenant comme représenté, mais aussi à l'assise des sièges « 1/3 -2/3 » et à celle des sièges individuels larges.

## Revendications

1. Siège de véhicule automobile comportant une assise (2) constituée d'une coque rigide (10) recouverte de moyens de rembourrage (11, 12), la coque (10) étant supportée par des appuis latéraux (4) reposant directement ou indirectement sur le plancher (8) du véhicule, la coque (10) formant un plateau ou une cuvette (13) se relevant à l'avant pour former sur la largeur du siège une bosse transversale anti-sous-marinage (14), **caractérisé en ce que** la face inférieure de la coque (10) comprend, le long du creux correspondant à la bosse anti-sous-marinage (14), au moins un élément de renfort (20) limitant la déformation de la bosse anti-sous-marinage (14) en cas de choc et disposé de manière à venir sensiblement en butée sur le plancher sous jacent (8) en cas de choc.

2. Siège selon la revendication 1, **caractérisé en ce qu'**il est prévu deux renforts (20).

3. Siège selon la revendication 2, **caractérisé en ce que** les renforts (20) sont disposés sensiblement au tiers et au deux-tiers de la largeur du siège.

4. Siège selon l'une quelconque des revendications 1 à 3, **caractérisé en ce que** chaque renfort (20) est sous forme de pyramide tronquée.

5. Siège selon l'une quelconque des revendications 1 à 4, **caractérisé en ce que** chaque renfort (20) est soudé à la face inférieure de la coque (10) du siège.

6. Siège selon l'une quelconque des revendications 1 à 5, **caractérisé en ce que** chaque renfort (20) est creux et loge un élément d'anti-sous-marinage actif (25).

7. Siège selon la revendication 6, **caractérisé en ce que** le renfort (20) est constitué par le boîtier de l'élément d'anti-sous-marinage actif (25), directement soudé à la coque (10) du siège.

8. Siège selon l'une quelconque des revendications 1 à 7, **caractérisé en ce que** le siège est une banquette (1) à dossier (3) et assise (2) repliable en portefeuille.

9. Siège selon l'une quelconque des revendications 1 à 8, **caractérisé en ce que** le siège repose sur des glissières latérales (4).

10. Siège selon l'une quelconque des revendications 1 à 9,
**caractérisé en ce que** le siège repose sur des glissières latérales (4) à charnières (6).

## Claims

1. Motor vehicle seat comprising a seat cushion (2) consisting of a rigid shell (10) covered with padding means (11, 12), the shell (10) being supported by lateral supports (4) that rest directly or indirectly on the floor (8) of the vehicle, the shell (10) forming a tray or bowl (13) that rises up at the front to form, across the width of the seat, an anti-submarining transverse hump (14), **characterized in that** the underside of the shell (10) comprises, along the hollow corresponding to the anti-submarining hump (14), at least one reinforcing element (20) that limits the deformation of the anti-submarining hump (14) in the event of an impact and which is positioned in such a way as to come more or less into abutment with the underlying floor (8) in the event of an impact.

2. Seat according to Claim 1, **characterized in that** two reinforcements (20) are provided.

3. Seat according to Claim 2, **characterized in that** the reinforcements (20) are positioned more or less one-third and two-thirds of the way across the width of the seat.

4. Seat according to any one of Claims 1 to 3, **characterized in that** each reinforcement (20) is in the form of a truncated pyramid.

5. Seat according to any one of Claims 1 to 4, **characterized in that** each reinforcement (20) is welded to the underside of the seat shell (10).

6. Seat according to any one of Claims 1 to 5, **characterized in that** each reinforcement (20) is hollow and houses an active anti-submarining element (25).

7. Seat according to Claim 6, **characterized in that** the reinforcement (20) consists of the casing of the active anti-submarining element (25), welded directly to the seat shell (10).

8. Seat according to any one of Claims 1 to 7, **characterized in that** the seat is a bench seat (1), the backrest (3) and seat cushion (2) of which can be folded one on to the other.

9. Seat according to any one of Claims 1 to 8, **characterized in that** the seat rests on lateral slides (4).

10. Seat according to any one of Claims 1 to 9, **characterized in that** the seat rests on lateral slides (4) that have hinges (6).

## Patentansprüche

1. Kraftfahrzeugsitz, der eine Sitzfläche (2) aufweist, die aus einer mit Polstermitteln (11, 12) bedeckten steifen Schale (10) besteht, wobei die Schale (10) von seitlichen Auflagern (4) getragen wird, die direkt oder indirekt auf dem Boden (8) des Fahrzeugs aufliegen, wobei die Schale (10) eine Platte oder eine Wanne (13) formt, die sich nach vorne anhebt, um über die Breite des Sitzes eine Anti-Submarining-Querwölbung (14) zu formen, **dadurch gekennzeichnet, dass** die Unterseite der Schale (10) entlang der der Anti-Submarining-Wölbung (14) entsprechenden Vertiefung mindestens ein Verstärkungselement (20) enthält, das die Verformung der Anti-Submarining-Wölbung (14) im Fall eines Aufpralls begrenzt und so angeordnet ist, dass es im Fall eines Aufpralls im Wesentlichen auf dem darunterliegenden Boden (8) in Anschlag kommt.

2. Sitz nach Anspruch 1, **dadurch gekennzeichnet, dass** zwei Verstärkungen (20) vorgesehen sind.

3. Sitz nach Anspruch 2, **dadurch gekennzeichnet, dass** die Verstärkungen (20) im Wesentlichen auf einem Drittel und auf Zweidrittel der Breite des Sitzes angeordnet sind.

4. Sitz nach einem der Ansprüche 1 bis 3, **dadurch gekennzeichnet, dass** jede Verstärkung (20) die Form eines Pyramidenstumpfs hat.

5. Sitz nach einem der Ansprüche 1 bis 4, **dadurch gekennzeichnet, dass** jede Verstärkung (20) an die Unterseite der Schale (10) des Sitzes geschweißt ist.

6. Sitz nach einem der Ansprüche 1 bis 5, **dadurch gekennzeichnet, dass** jede Verstärkung (20) hohl ist und ein aktives Anti-Submarining-Element (25) aufnimmt.

7. Sitz nach Anspruch 6, **dadurch gekennzeichnet, dass** die Verstärkung (20) aus dem Gehäuse des aktiven Anti-Submarining-Elements (25) besteht, das direkt an die Schale (10) des Sitzes geschweißt ist.

8. Sitz nach einem der Ansprüche 1 bis 7, **dadurch gekennzeichnet, dass** der Sitz eine Sitzbank (1) mit Rückenlehne (3) und Sitzfläche (2) ist, die umlegbar ist.

9. Sitz nach einem der Ansprüche 1 bis 8, **dadurch gekennzeichnet, dass** der Sitz auf Seitenschienen (4) ruht.

10. Sitz nach einem der Ansprüche 1 bis 9, **dadurch gekennzeichnet, dass** der Sitz auf Seitenschienen (4) mit Scharnieren (6) ruht.
